# DEMANDE DE BREVET EUROPEEN

(11) **EP 2 273 440 A1**
(43) Date de publication de la demande: **12.01.2011**
(21) Numéro de dépôt: 09290548.8
(22) Date de dépôt: 08.07.2009
(51) Int. Cl.: G06Q 30/00

(54) **Procédé et dispositif d'obtention d'informations techniques à partir d'informations de satisfaction d'utilisation de services et/ou produits fournies par des usagers de terminaux de communication**

(71) Demandeur: Alcatel Lucent, 75008 Paris (FR)
(72) Inventeur: Hedarchet, Stéphane, 75008 Paris (FR); Pinault, Francis, 92270 Bois-Colombes (FR)
(74) Mandataire: Hedarchet, Stéphane

(57) **Abrégé**

Un dispositif de traitement (D) est dédié à l'obtention d'informations techniques issues d'informations primaires fournies par des usagers avec des terminaux de communication (T). Ce dispositif (D) est propre à être couplé à un réseau de communication (RC) et comprend :
- des moyens d'obtention (MO) chargés d'obtenir des informations primaires fournies par des usagers, relatives à leur satisfaction d'utilisation d'au moins un service et/ou d'au moins un produit, et stockées dans des moyens de stockage (MS1-MS2) accessibles via le réseau de communication (RC), et
- des moyens de traitement (MT) chargés de regrouper dans au moins deux catégories différentes les informations primaires obtenues par les moyens d'obtention (MO) en fonction d'au moins une règle choisie, puis de sélectionner l'une au moins de ces catégories en fonction d'au moins un critère choisi, et de déterminer parmi les informations primaires de chaque catégorie sélectionnée des informations techniques qui sont relatives à des développements techniques d'au moins un service et/ou d'au moins un produit.

## Description

L'invention concerne l'obtention automatisée d'informations techniques en vue d'améliorer des services et/ou des produits ou de créer de nouveaux services et/ou de nouveaux produits pour des usagers de terminaux de communication.

On entend ici par « service » tout type de service ou application qui peut être utilisé(e) par un usager avec ou sans son terminal de communication, directement ou indirectement. Ainsi, il pourra par exemple s'agir d'un service ou d'une application mis(e) à la disposition d'usagers clients d'un opérateur de réseau(x) de communication (filaire(s) ou non filaire(s)) pour leur permettre d'effectuer des opérations et/ou des fonctions particulières avec leurs terminaux de communication.

Par ailleurs, on entend ici par « produit » tout type d'équipement électronique et/ou logiciel qui peut être utilisé par un usager avec ou sans son terminal de communication, directement ou indirectement, ou qui constitue éventuellement lui-même un terminal de communication.

Il est important de noter que le produit ou le service peut n'avoir strictement aucun rapport avec un équipement de communication.

Avec l'augmentation constante des services et des produits mis à la disposition des usagers, il devient de plus en plus difficile pour un usager de maîtriser l'utilisation de plusieurs services et/ou produits, et plus particulièrement lorsqu'il doit les faire fonctionner en parallèle ou en mode coopératif. Afin de faire face à ce problème, les fabricants de service et/ou de produits sont contraints de définir des fonctionnalités et/ou interfaces qui sont de plus en plus complexes et donc qui deviennent de plus en plus difficiles à maîtriser.

Aujourd'hui, lorsqu'un usager est satisfait ou insatisfait d'un produit ou service, il peut généralement le signaler au fabricant au moyen d'un message qui peut être éventuellement saisi dans une fenêtre dédiée d'une application dédiée (comme c'est le cas de l'application « Feedback » proposée par la société Apple). Ces messages sont réceptionnés par le fabricant, puis analysés par des techniciens, développeurs ou commerciaux qui décident d'y répondre s'ils l'estiment nécessaire ou justifié. Ce mode d'analyse de message non automatisé s'avère fastidieux. En outre, lorsqu'un fabricant reçoit de nombreux messages portant sur une multitude de services ou produits ou fonctionnalités, il est généralement (très) difficile de s'apercevoir du fait qu'une opinion d'usagers sur un point technique particulier est majoritaire ou minoritaire, et il est encore plus difficile de déduire des contenus des messages, d'une part, des informations techniques susceptibles de suggérer des améliorations de service ou de produit, voire même d'un nouveau service ou produit, et/ou des modifications des informations sur les services et produits qui sont mises à la disposition des usagers pour faciliter leur utilisation de ces services et produits, et d'autre part, des informations générales permettant de modifier ou d'améliorer des campagnes publicitaires sur des services ou produits.

L'invention a donc pour but d'améliorer la situation.

Elle propose à cet effet un procédé, dédié à l'obtention d'informations techniques issues d'informations primaires fournies par des usagers avec des terminaux de communication couplés à un réseau de communication, et comprenant au moins :
- une étape i) consistant à obtenir des informations primaires fournies par des usagers, relatives à leur satisfaction d'utilisation d'au moins un service et/ou d'au moins un produit (avec leurs terminaux de communication), et stockées dans des moyens de stockage,
- une étape ii) consistant à regrouper dans au moins deux catégories différentes les informations primaires obtenues en fonction d'au moins une règle choisie, puis à sélectionner l'une au moins de ces catégories en fonction d'au moins un critère choisi, et
- une étape iii) consistant à déterminer parmi les informations primaires de chaque catégorie sélectionnée des informations techniques qui sont relatives à des développements techniques d'au moins un service et/ou d'au moins un produit.

Le procédé selon l'invention peut comporter d'autres caractéristiques qui peuvent être prises séparément ou en combinaison, et notamment :
- une première règle choisie peut consister à déterminer si les informations primaires ont été fournies par un usager expert ou non expert et une deuxième règle choisie peut consister à déterminer si les informations primaires sont de type positif ou de type négatif, une « information primaire de type positif » étant une information primaire montrant la satisfaction d'un usager lors de l'utilisation d'un service ou d'un produit, et une « information primaire de type négatif » étant une information primaire montrant l'insatisfaction d'un usager lors de l'utilisation d'un service ou d'un produit ;
   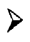 une troisième règle choisie peut consister à déterminer si des informations primaires de type positif reflètent une opinion d'usagers majoritaire ou minoritaire ;
   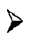 une quatrième règle choisie peut consister à déterminer si des informations primaires de type négatif sont à caractère constructif ou destructif.
      - à l'étape ii) on peut sélectionner la catégorie qui contient des informations primaires de type positif reflétant une opinion d'usagers minoritaire et/ou la catégorie qui contient des informations primaires de type négatif et à caractère constructif ;
- à l'étape ii) on peut procéder au regroupement catégoriel au moyen d'une analyse sémantique des informations primaires et/ou d'une technique de profilage d'informations utilisant chaque règle choisie ;
- à l'étape ii) on peut procéder également à l'attribution d'un niveau d'importance aux informations primaires qui sont contenues dans chaque catégorie sélectionnée, et à l'étape iii) on peut déterminer des informations techniques parmi les informations primaires de chaque catégorie sélectionnée qui sont associées à un niveau d'importance qui est supérieur ou égal à un seuil choisi ;
   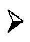 à l'étape ii) on peut déterminer le nombre de mots clés qui sont
      contenus dans chaque information primaire d'une catégorie sélectionnée par comparaison avec un ensemble de mots clés associé à chaque service considéré et/ou chaque produit considéré, et on peut attribuer à chaque information primaire d'une catégorie sélectionnée un niveau d'importance qui est fonction de son nombre de mots clés déterminé compte tenu du service considéré et/ou du produit considéré ;
- à l'étape i) on peut déterminer les informations primaires dans des sources d'informations qui sont accessibles via l'Internet (comme par exemple des « sites web »).

L'invention propose également un dispositif de traitement, pour l'obtention d'informations techniques issues d'informations primaires fournies par des usagers avec des terminaux de communication couplés à un réseau de communication, et comprenant :
- des moyens d'obtention chargés d'obtenir des informations primaires fournies par des usagers, relatives à leur satisfaction d'utilisation d'au moins un service et/ou d'au moins un produit, et stockées dans des moyens de stockage accessibles via le réseau de communication, et
- des moyens de traitement chargés de regrouper dans au moins deux catégories différentes les informations primaires obtenues par les moyens d'obtention en fonction d'au moins une règle choisie, puis pour sélectionner l'une au moins de ces catégories en fonction d'au moins un critère choisi, et pour déterminer parmi les informations primaires de chaque catégorie sélectionnée des informations techniques relatives à des développements techniques d'au moins un service et/ou d'au moins un produit.

Le dispositif selon l'invention peut comporter d'autres caractéristiques qui peuvent être prises séparément ou en combinaison, et notamment :
- ses moyens de traitement peuvent être chargés d'effectuer les regroupements en fonction d'une première règle choisie consistant à déterminer si lesdites informations primaires ont été fournies par un usager expert ou non expert et/ou d'une deuxième règle choisie consistant à déterminer si lesdites informations primaires sont de type positif ou de type négatif.
   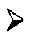 ses moyens de traitement peuvent être chargés d'effectuer les regroupements en fonction d'une troisième règle choisie qui consiste à déterminer si des informations primaires de type positif reflètent une opinion d'usagers majoritaire ou minoritaire ;
   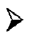 ses moyens de traitement peuvent être chargés d'effectuer les regroupements en fonction d'une quatrième règle choisie qui consiste à déterminer si des informations primaires de type négatif sont à caractère constructif ou destructif ;
      - ses moyens de traitement peuvent être chargés de sélectionner la catégorie qui contient des informations primaires de type positif reflétant une opinion d'usagers minoritaire et/ou la catégorie qui contient des informations primaires de type négatif et à caractère constructif ;
- ses moyens de traitement peuvent être chargés d'effectuer les regroupements catégoriels au moyen d'une analyse sémantique des informations primaires et/ou d'une technique de profilage d'informations utilisant chaque règle choisie ;
- ses moyens de traitement peuvent être chargés d'attribuer un niveau d'importance aux informations primaires qui sont contenues dans chaque catégorie sélectionnée, et pour déterminer des informations techniques parmi les informations primaires de chaque catégorie sélectionnée qui sont associées à un niveau d'importance qui est supérieur ou égal à un seuil choisi ;
- ses moyens de traitement peuvent être chargés de déterminer le nombre de mots clés qui sont contenus dans chaque information primaire d'une catégorie sélectionnée par comparaison avec un ensemble de mots clés associé à chaque service considéré et/ou chaque produit considéré, et pour attribuer à chaque information primaire d'une catégorie sélectionnée un niveau d'importance qui est fonction de son nombre de mots clés déterminé compte tenu du service considéré et/ou du produit considéré.

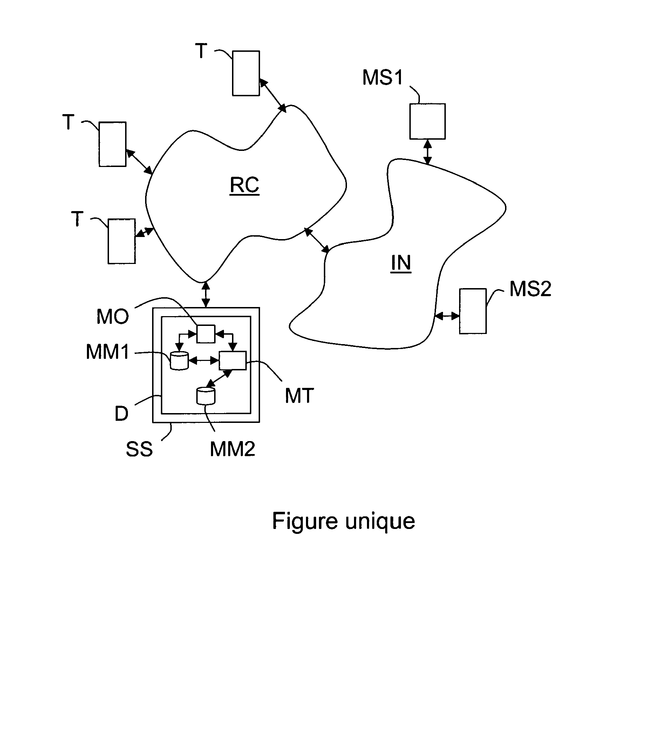

D'autres caractéristiques et avantages de l'invention apparaîtront à l'examen de la description détaillée ci-après, et du dessin annexé, sur lequel l'unique figure illustre de façon très schématique et fonctionnelle un exemple de réseau de communication couplé à l'Internet et comprenant un serveur équipé d'un exemple de réalisation de dispositif de traitement selon l'invention.

Le dessin annexé pourra non seulement servir à compléter l'invention, mais aussi contribuer à sa définition, le cas échéant.

L'invention a notamment pour objet d'offrir un procédé et un dispositif de traitement (D) associé permettant d'obtenir des informations notamment techniques à partir d'informations primaires qui ont été fournies par des usagers de terminaux de communication (T) avec ces derniers (T).

Dans ce qui suit, on considère à titre d'exemple non limitatif que les usagers sont équipés de terminaux de communication (T) de type filaire, comme par exemple des ordinateurs, pouvant se connecter à un réseau de communication (RC) de type filaire (par exemple ADSL). Mais, l'invention n'est limitée ni à ce type de réseau de communication, ni à ce type de terminal de communication. Elle concerne en effet tout type de réseau de communication filaire ou non filaire, et donc tout type de terminal de communication pouvant se connecter à un réseau de communication filaire ou non filaire. Par conséquent, le réseau de communication (RC) pourra être, par exemple, un réseau mobile (ou cellulaire), et les terminaux de communication (T) pourront être, par exemple, des ordinateurs portables, des téléphones fixes, des assistants personnels numériques communicants (ou « PDAs »), ou des consoles de jeux communicantes.

On a schématiquement représenté sur l'unique figure un exemple de réseau (de communication) RC auquel sont connectés des terminaux (de communication) T, appartenant à des usagers qui sont clients (directement ou indirectement (nomades)) de l'opérateur dudit réseau RC, et qui est connecté au réseau de réseaux (ou Internet) IN, lui-même couplé à (ou comprenant) des sources d'informations primaires comprenant des moyens de stockage MSi (ici i = 1 ou 2, à titre d'exemple non limitatif).

On entend ici par « informations primaires » des contenus de messages d'usagers de terminaux T, relatifs à leur satisfaction d'utilisation d'au moins un service et/ou d'au moins un produit.

Par ailleurs, on entend ici par « source d'informations primaires » tout équipement accessible, directement ou indirectement, via au moins un réseau de communication, et comprenant des moyens de stockage MSi stockant (au moins) des informations primaires d'usagers. Par conséquent, une source d'informations primaires peut être un équipement de réseau ou plus généralement un équipement communicant comprenant une mémoire ou une base de données MSi, par exemple. Il pourra notamment s'agir de sites web.

Il est important de noter que l'invention concerne tout type de produit ou service utilisable par un usager avec ou sans son terminal de communication, directement ou indirectement, dès lors que ce produit ou service peut faire l'objet d'une remontée de messages de satisfaction vers un site ou serveur accessible via un réseau de communication.

L'invention propose de mettre en oeuvre un procédé d'obtention automatique d'informations, notamment techniques, à partir d'informations primaires d'usagers qui sont stockées dans des sources d'informations MSi. Ce procédé peut par exemple être mis en oeuvre au moyen d'un dispositif de traitement D selon l'invention.

On notera que dans l'exemple non limitatif illustré, le dispositif de traitement D fait partie d'un équipement de réseau, comme par exemple un serveur de services SS (ici connecté au réseau RC, mais qui pourrait être couplé à l'Internet IN ou bien faire partie de ce dernier (IN)). Par conséquent, un dispositif de traitement D, selon l'invention, peut être réalisé sous la forme de modules logiciels (ou informatiques), ou bien de circuits électroniques, ou encore d'une combinaison de circuits électroniques et de modules logiciels.

Le procédé selon l'invention comprend trois étapes principales.

Une première étape principale (i) consiste à obtenir des informations primaires d'usagers stockées dans des moyens de stockage MSi, (ici confondus avec des sources d'informations primaires connectées à l'Internet IN).

Cette première étape principale (i) peut par exemple être mise en oeuvre par des moyens d'obtention MO du dispositif D. On notera que les moyens d'obtention MO peuvent être agencés de manière à requérir, par exemple périodiquement ou sur requête, auprès d'au moins un moyen de stockage MSi des (éventuellement toutes les) informations primaires qu'il stocke et qui sont relatives à au moins un service donné et/ou au moins un produit donné, voire même seulement à une ou plusieurs fonctionnalités données d'un service donné ou d'un produit donné. Dans une variante de réalisation, les moyens d'obtention MO peuvent être agencés de manière à recevoir automatiquement d'au moins un moyen de stockage MSi des (éventuellement toutes les) nouvelles informations primaires qu'il vient juste de stocker et qui sont relatives à au moins un service donné et/ou au moins un produit donné, voire même seulement à une ou plusieurs fonctionnalités données d'un service donné ou d'un produit donné.

Par exemple, et comme illustré non limitativement sur l'unique figure, le dispositif D peut éventuellement comprendre un moyen de stockage MM1 (mémoire ou base de données) dans lequel il stocke toutes les informations primaires qu'il a obtenues, afin qu'elles puissent être réutilisées localement à n'importe quel moment.

Une deuxième étape principale (ii) du procédé selon l'invention consiste tout d'abord à regrouper dans au moins deux catégories différentes les informations primaires, qui ont été obtenues (ici par les moyens d'obtention MO), en fonction d'au moins une règle choisie. On notera que ce regroupement ce fait pour au moins un service donné et/ou au moins un produit donné.

Cette deuxième étape principale (ii) peut par exemple être mise en oeuvre par des moyens de traitement MT du dispositif D, qui sont couplés aux moyens d'obtention MO et/ou aux éventuels moyens de stockage MM1.

Pour ce faire, les moyens de traitement MT peuvent par exemple utiliser une première règle choisie, qui consiste à déterminer si chaque information primaire a été fournie par un usager qui est un expert ou un non expert du service ou produit considéré, et/ou une deuxième règle choisie, qui consiste à déterminer si chaque information primaire est de type positif ou de type négatif.

On entend ici par « information primaire de type positif » une information primaire qui montre la satisfaction d'un usager lors de l'utilisation d'un service ou d'un produit, et par « information primaire de type négatif » une information primaire qui montre l'insatisfaction d'un usager lors de l'utilisation d'un service ou d'un produit.

Lorsque les moyens de traitement MT utilisent la deuxième règle choisie décrite ci-avant, ils peuvent également utiliser une troisième règle choisie qui consiste à déterminer si des informations primaires de type positif (éventuellement négatif) reflètent une opinion d'usager à caractère majoritaire ou minoritaire. On comprendra que l'utilisation de cette troisième règle permet de subdiviser une catégorie (opinions positives (ou éventuellement négatives)) en deux sous catégories (majoritaire et minoritaire).

Cette subdivision résulte en effet, d'une part, du constat que de nombreuses informations primaires de type positif à caractère majoritaire permettaient d'obtenir des informations techniques ou généralistes susceptibles de conduire à des (petites) améliorations de service ou de produit, et d'autre part, du constat que de nombreuses informations primaires de type positif à caractère minoritaire permettaient d'obtenir des informations techniques ou généralistes susceptibles de conduire à des perfectionnements importants d'un service ou produit, voire même à des innovations.

Par ailleurs, lorsque les moyens de traitement MT utilisent la deuxième règle choisie décrite ci-avant, ils peuvent également utiliser une quatrième règle choisie qui consiste à déterminer si chaque information primaire de type négatif est à caractère constructif ou destructif. On comprendra que l'utilisation de cette quatrième règle permet de subdiviser une catégorie (opinions négatives) en deux sous catégories (constructive et destructive).

On entend ici par « information primaire de type négatif mais constructive » une information primaire qui montre l'insatisfaction d'un usager lors de l'utilisation d'un service ou d'un produit et qui contient une explication technique de la cause de cette insatisfaction, et par « information primaire de type négatif mais destructive » une information primaire qui montre exclusivement l'insatisfaction d'un usager lors de l'utilisation d'un service ou d'un produit sans aucune explication technique de la cause de cette insatisfaction.

On notera que pour faciliter la prise en compte d'un message d'usager constituant une information primaire, il est préférable que chaque fabricant mette à la disposition des usagers une application dédiée (par exemple similaire à l'application Feedback proposée par la société Apple). Une telle application comprend par exemple une ou plusieurs pages comprenant des ensembles de mots clés choisis parmi lesquels l'usager peut effectuer des sélections et/ou des fenêtres dans lesquelles les usagers peuvent saisir des phrases décrivant leur opinion ou un problème rencontré.

Chaque ensemble de mots clés et les éventuelles relations entre ces mots clés peuvent par exemple être stockés dans un moyen de stockage MM2. Ce dernier (MM2) peut par exemple, comme illustré non limitativement, faire partie du dispositif D et être couplé aux moyens de traitement MT. Il peut par exemple se présenter sous la forme d'une mémoire ou d'une base de données.

Lors de la deuxième étape (ii), on (les moyens de traitement MT) peu(ven)t par exemple procéder au regroupement catégoriel en effectuant une analyse sémantique des informations primaires et/ou une technique de profilage d'informations (ou « profiling ») utilisant chaque règle choisie. Tout type d'analyse sémantique et/ou tout type de profilage connu(s) de l'homme de l'art et capable(s) d'analyser des mots de phrase(s) d'un message afin de déterminer une catégorie ou sous-catégorie dans laquelle peut être placé ce message peut être ici utilisé. Il est rappelé que le profilage consiste notamment à déterminer le profil d'un usager (comme par exemple le fait qu'il semble s'agir d'un expert ou d'un non expert).

Par exemple, l'analyse sémantique peut se faire par comparaison avec un ensemble de mots clés qui est associé au service ou produit considéré et compte tenu des relations connues existant entre les mots clés de cet ensemble.

Par exemple, une information primaire peut se présenter sous la forme des deux phrases suivantes : « Je pense qu'un nouveau produit pourrait être créé par Apple pour son iPhone®. Cela serait bien si je pouvais disposer d'un clavier supplémentaire à connectivité sans fil (par exemple Bluetooth ou WiFi) pour mon gestionnaire de courrier électronique ». Alors, une analyse sémantique de ces deux phrases peut aboutir à la correspondance suivante :
- « Je pense » : proposition,
- « un nouveau produit pourrait être créé » : proposition,
- « iPhone® » : produit concerné,
- « d'un clavier supplémentaire » : nouveau produit proposé,
- « à connectivité sans fil (par exemple Bluetooth ou WiFi) » : technologie proposée,
- « gestionnaire de courrier électronique » : information technique complémentaire assurant le lien entre le nouveau produit proposé et le produit concerné.

Une comparaison avec les mots clés de l'ensemble qui est associé au produit iPhone® et à ses accessoires, permet alors de caractériser le contenu informatif de l'information primaire mentionnée ci-dessus. Ainsi, on peut ici déduire de l'analyse sémantique que l'on est en présence d'une proposition de nouveau produit relative à un produit connu.

Une fois que les catégories, et leurs éventuelles sous-catégories, ont été constituées, la deuxième étape principale (ii) du procédé selon l'invention se poursuit par la sélection de l'une au moins des catégories (ou des éventuelles sous-catégories) en fonction d'au moins un critère choisi.

Lors de la deuxième étape (ii), on (les moyens de traitement MT) peu(ven)t par exemple sélectionner la sous-catégorie d'informations primaires représentatives d'opinions d'usagers minoritaires de la catégorie qui contient les informations primaires de type positif et/ou la sous-catégorie d'informations primaires représentatives d'opinions d'usagers à caractère constructif de la catégorie qui contient les informations primaires de type négatif.

Dans une variante ou en complément, la sélection peut ne porter que sur les opinions des usagers qui sont considérés comme des experts ou au contraire que sur les opinions des usagers qui sont considérés comme des non experts.

Dans une autre variante, la sélection peut porter (à un instant donné) sur les propositions de nouveaux produits relatives à un produit connu. Ainsi, dans l'exemple d'information primaire mentionné ci-avant, l'information primaire pourra par exemple être communiquée au gestionnaire des produits et accessoires relatifs à l'iPhone® au sein de la société Apple.

Une troisième étape principale (iii) du procédé selon l'invention consiste à déterminer parmi les informations primaires de chaque catégorie (ou sous-catégorie) sélectionnée des informations techniques qui sont relatives à des développements techniques (par rapport à l'état de l'art connu) d'au moins un service et/ou d'au moins un produit. On comprendra que cette détermination peut notamment se faire en utilisant la correspondance établie entre les mots clés détectés dans une information primaire et des mots caractérisants.

On notera que pour améliorer la qualité de la détermination des informations techniques contenues dans les informations primaires de chaque catégorie (ou sous-catégorie) sélectionnée, on (les moyens de traitement MT) peu(ven)t par exemple procéder lors de la deuxième étape (ii) à l'attribution d'un niveau d'importance à chaque information primaire contenue dans chaque catégorie sélectionnée.

Pour ce faire, les moyens de traitement MT peuvent par exemple déterminer le nombre de mots clés (pertinents) qui sont contenus dans chaque information primaire d'une catégorie (ou sous-catégorie) sélectionnée au moyen d'une comparaison avec l'ensemble de mots clés qui est associé au service considéré et/ou au produit considéré (et qui est éventuellement stocké dans le moyen de stockage MM2), puis ils peuvent attribuer à chaque information primaire d'une catégorie (ou sous-catégorie) sélectionnée un niveau d'importance qui est fonction de son nombre de mots clés déterminé compte tenu du service considéré et/ou du produit considéré.

En présence d'un tel classement par niveau d'importance, il est possible (pour les moyens de traitement MT), lors de la troisième étape (iii), de déterminer parmi les informations primaires de chaque catégorie (ou sous-catégorie) sélectionnée des informations techniques qui sont associées à un niveau d'importance qui est supérieur ou égal à un seuil choisi. Par exemple, si on attribue des niveaux d'importance compris entre les valeurs 1 et 5 (la valeur 1 étant la moins importante et la valeur 5 étant la plus importante), on peut choisir la valeur 4 comme seuil de sélection. Dans ce cas (non limitatif), chaque information primaire appartenant à une catégorie (ou sous-catégorie) sélectionnée et associée à un niveau d'importance égal à 4 ou 5 sera sélectionnée, en vue d'une analyse par une personne qui est effectivement qualifiée pour cela.

Il est important de noter que le dispositif D peut également et éventuellement permettre d'extraire des informations primaires sélectionnées des informations générales qui peuvent être utiles à des personnes qualifiées (comme par exemple des publicistes ou des commerciaux) pour modifier ou améliorer des campagnes publicitaires sur des services ou produits.

L'invention ne se limite pas aux modes de réalisation de procédé d'obtention d'informations, de dispositif de traitement et d'équipement de réseau décrits ci-avant, seulement à titre d'exemple, mais elle englobe toutes les variantes que pourra envisager l'homme de l'art dans le cadre des revendications ci-après.

## Revendications

1. Procédé d'obtention d'informations techniques issues d'informations primaires fournies par des usagers avec des terminaux de communication (T) couplés à un réseau de communication, **caractérisé en ce qu'**il comprend au moins :
- une étape i) consistant à obtenir des informations primaires fournies par des usagers, relatives à leur satisfaction d'utilisation d'au moins un service et/ou d'au moins un produit, et stockées dans des moyens de stockage (MSi),
- une étape ii) consistant à regrouper dans au moins deux catégories différentes lesdites informations primaires obtenues en fonction d'au moins une règle choisie, puis à sélectionner l'une au moins desdites catégories en fonction d'au moins un critère choisi, et
- une étape iii) consistant à déterminer parmi lesdites informations primaires de chaque catégorie sélectionnée des informations techniques relatives à des développements techniques d'au moins un service et/ou d'au moins un produit.

2. Procédé selon la revendication 1, **caractérisé en ce qu'**une première règle choisie consiste à déterminer si lesdites informations primaires ont été fournies par un usager expert ou non expert et une deuxième règle choisie consiste à déterminer si lesdites informations primaires sont de type positif ou de type négatif, une « information primaire de type positif » étant une information primaire montrant la satisfaction d'un usager lors de l'utilisation d'un service ou d'un produit, et une « information primaire de type négatif » étant une information primaire montrant l'insatisfaction d'un usager lors de l'utilisation d'un service ou d'un produit.

3. Procédé selon la revendication 2, **caractérisé en ce qu'**une troisième règle choisie consiste à déterminer si des informations primaires de type positif reflètent une opinion d'usagers majoritaire ou minoritaire.

4. Procédé selon l'une des revendications 2 et 3, **caractérisé en ce qu'**une quatrième règle choisie consiste à déterminer si des informations primaires de type négatif sont à caractère constructif ou destructif.

5. Procédé selon l'une des revendications 3 et 4, **caractérisé en ce qu'**à l'étape ii) on sélectionne la catégorie qui contient des informations primaires de type positif reflétant une opinion d'usagers minoritaire et/ou la catégorie qui contient des informations primaires de type négatif et à caractère constructif.

6. Procédé selon l'une des revendications 1 à 5, **caractérisé en ce qu'**à l'étape ii) on procède au regroupement catégoriel au moyen d'une analyse sémantique desdites informations primaires et/ou d'une technique de profilage d'informations utilisant chaque règle choisie.

7. Procédé selon l'une des revendications 1 à 6, **caractérisé en ce qu'**à l'étape ii) on procède également à l'attribution d'un niveau d'importance auxdites informations primaires qui sont contenues dans chaque catégorie sélectionnée, et à l'étape iii) on détermine des informations techniques parmi les informations primaires de chaque catégorie sélectionnée qui sont associées à un niveau d'importance supérieur ou égal à un seuil choisi.

8. Procédé selon la revendication 7, **caractérisé en ce qu'**à l'étape ii) on détermine le nombre de mots clés qui sont contenus dans chaque information primaire d'une catégorie sélectionnée par comparaison avec un ensemble de mots clés associé à chaque service considéré et/ou chaque produit considéré, et on attribue à chaque information primaire d'une catégorie sélectionnée un niveau d'importance fonction de son nombre de mots clés déterminé compte tenu du service considéré et/ou du produit considéré.

9. Dispositif de traitement (D) pour l'obtention d'informations techniques issues d'informations primaires fournies par des usagers avec des terminaux de communication (T) couplés à un réseau de communication (RC), **caractérisé en ce qu'**il comprend :
- des moyens d'obtention (MO) agencés pour obtenir des informations primaires fournies par des usagers, relatives à leur satisfaction d'utilisation d'au moins un service et/ou d'au moins un produit, et stockées dans des moyens de stockage (MSi) accessibles via ledit réseau de communication (RC), et
- des moyens de traitement (MT) agencés pour regrouper dans au moins deux catégories différentes lesdites informations primaires obtenues par lesdits moyens d'obtention (MO) en fonction d'au moins une règle choisie, puis pour sélectionner l'une au moins desdites catégories en fonction d'au moins un critère choisi, et pour déterminer parmi lesdites informations primaires de chaque catégorie sélectionnée des informations techniques relatives à des développements techniques d'au moins un service et/ou d'au moins un produit.

10. Dispositif selon la revendication 9, **caractérisé en ce que** lesdits moyens de traitement (MT) sont agencés pour effectuer les regroupements en fonction d'une première règle choisie consistant à déterminer si lesdites informations primaires ont été fournies par un usager expert ou non expert et/ou d'une deuxième règle choisie consistant à déterminer si lesdites informations primaires sont de type positif ou de type négatif une « information primaire de type positif » étant une information primaire montrant la satisfaction d'un usager lors de l'utilisation d'un service ou d'un produit, et une « information primaire de type négatif » étant une information primaire montrant l'insatisfaction d'un usager lors de l'utilisation d'un service ou d'un produit.

11. Dispositif selon la revendication 10, **caractérisé en ce que** lesdits moyens de traitement (MT) sont agencés pour effectuer les regroupements en fonction d'une troisième règle choisie consistant à déterminer si des informations primaires de type positif reflètent une opinion d'usagers majoritaire ou minoritaire.

12. Dispositif selon l'une des revendications 10 et 11, **caractérisé en ce que** lesdits moyens de traitement (MT) sont agencés pour effectuer les regroupements en fonction d'une quatrième règle choisie consistant à déterminer si des informations primaires de type négatif sont à caractère constructif ou destructif.

13. Dispositif selon l'une des revendications 11 et 12, **caractérisé en ce que** lesdits moyens de traitement (MT) sont agencés pour sélectionner la catégorie qui contient des informations primaires de type positif reflétant une opinion d'usagers minoritaire et/ou la catégorie qui contient des informations primaires de type négatif et à caractère constructif.

14. Dispositif selon l'une des revendications 9 à 13, **caractérisé en ce que** lesdits moyens de traitement (MT) sont agencés pour effectuer les regroupements catégoriels au moyen d'une analyse sémantique desdites informations primaires et/ou d'une technique de profilage d'informations utilisant chaque règle choisie.

15. Dispositif selon l'une des revendications 9 à 14, **caractérisé en ce que** lesdits moyens de traitement (MT) sont agencés pour attribuer un niveau d'importance auxdites informations primaires qui sont contenues dans chaque catégorie sélectionnée, et pour déterminer des informations techniques parmi les informations primaires de chaque catégorie sélectionnée qui sont associées à un niveau d'importance supérieur ou égal à un seuil choisi.

16. Dispositif selon la revendication 15, **caractérisé en ce que** lesdits moyens de traitement (MT) sont agencés pour déterminer le nombre de mots clés qui sont contenus dans chaque information primaire d'une catégorie sélectionnée par comparaison avec un ensemble de mots clés associé à chaque service considéré et/ou chaque produit considéré, et pour attribuer à chaque information primaire d'une catégorie sélectionnée un niveau d'importance fonction de son nombre de mots clés déterminé compte tenu du service considéré et/ou du produit considéré.
